# EUROPÄISCHE PATENTANMELDUNG

(11) **EP 4 495 719 A1**
(43) Veröffentlichungstag der Anmeldung: **22.01.2025**
(21) Anmeldenummer: 23186102.2
(22) Anmeldetag: 18.07.2023
(51) Int. Cl.: G05B 19/042

(54) **VERFAHREN UND ENGINEERING-SYSTEM ZUR GENERIERUNG EINER BENUTZEROBERFLÄCHE FÜR EINE INDUSTRIELLE AUTOMATISIERUNGSANORDNUNG**

(71) Anmelder: Siemens Aktiengesellschaft, 80333 München (DE)
(72) Erfinder: Forster, Susanne, 90763 Fürth (DE); Geipel, Markus Michael, 81739 München (DE); Mamaladze, George, 81541 München (DE); Müller, Ralf, 90542 Eckental (DE); Sutor, Ariane, 82166 Gräfelfing (DE)
(74) Vertreter: Siemens Patent Attorneys

(57) **Zusammenfassung**

Die Erfindung betrifft ein Verfahren und ein Engineering-System zur Generierung einer Benutzeroberfläche für ein Bedien- und Beobachtungsgerät einer industriellen Automatisierungsanordnung. Dabei werden unter Verwendung einer generativen Grammatik anhand von Metainformationen zu den Datenobjekten, z.B. Bezeichnern (Tags) der Datenobjekte, mögliche grafische Objekte für die Benutzeroberfläche (Screen) identifiziert, danach wird aus den identifizierten grafischen Objekten eine Anzahl möglicher Benutzeroberflächen (Screen) generiert, nachfolgend wird für viele oder alle der generierten Benutzeroberflächen (Screen) eine Zuordnung der Zustandsvariablen der grafischen Objekte zu den Datenobjekten vorgenommen, dann wird eine Anzahl aus den im dritten Schritt generierten Benutzeroberflächen (Screen) ausgewählt, wobei die Auswahl anhand der Menge und/oder Qualität an insgesamten Zuordnungen der jeweiligen Benutzeroberfläche (Screen) erfolgt, wobei für jede Zuordnung eines grafischen Objekte zu einem Datenobjekt ein Grad der Übereinstimmung der jeweiligen Zustandsvariablen zu dem zugeordneten Datenobjekt bewertet wird, und schließlich werden die zuvor ausgewählten Benutzeroberflächen (Screen) zur Verwendung vorgeschlagen oder vorgesehen. Die damit vorgeschlagene Verwendung einer generativen Grammatik für zur Definition möglicher Benutzeroberflächen in den Engineering-Systemen für Bedien- und Beobachtungsgeräte und führt dabei zu einem hohen Flexibilitätsgrad und zu einer deutlichen Entlastung der mit der Generierung der Benutzeroberflächen betrauten Personen.

## Beschreibung

Die Erfindung betrifft ein Verfahren zur Generierung einer Benutzeroberfläche für ein Bedien- und Beobachtungsgerät einer industriellen Automatisierungsanordnung gemäß dem Oberbegriff des Patentanspruchs 1, und ein Engineering-System zur Generierung einer Benutzeroberfläche für ein Bedien- und Beobachtungsgerät einer industriellen Automatisierungsanordnung gemäß dem Oberbegriff des Patentanspruchs 8.

Industrielle Automatisierungsanordnungen werden üblicherweise durch Bedien- und Beobachtungsgeräte mit grafischen Benutzeroberflächen, sogenannten Screens, gesteuert. Übliche Bedien- und Beobachtungsgeräte sind beispielsweise HMI-Geräte bzw. HMI-Panels (HMI = Human Machine Interface), es kommen aber auch SCADA-Systeme (SCADA Supervisory Control & Data Acquisition) sowie eine Vielzahl anderer ähnlicher Geräte für das Bedienen und Beobachten infrage. Alle diese Geräte haben gemeinsam, dass sie eine oder eine Anzahl verschiedener Benutzeroberflächen oder Bildschirmseiten, sogenannte Screens, aufweisen, wobei auf jedem Screen und somit auf jeder Benutzeroberfläche eine Anzahl Elemente der industriellen Automatisierungsanordnung mittels grafischer Objekte dargestellt werden, wobei die grafischen Objekte beispielsweise einen Zustand des jeweiligen Elementes (beispielsweise eine Maschine, ein Prozesselement oder dergleichen) darstellen kann oder eine Anzahl Bedienelemente zur Beeinflussung des jeweiligen Elementes, beispielsweise einen Schalter oder Regelknopf, darstellen kann.

Die Elemente einer industriellen Automatisierungsanordnung werden meistens durch eine industrielle Steuerung, beispielsweise eine speicherprogrammierbare Steuerung (PLC) oder dergleichen, gesteuert, wobei die industrielle Steuerung mit Sensoren und Aktoren der jeweiligen Elemente verbunden ist.

Innerhalb der industriellen Steuerung sind die Sensoren und Aktoren der Elemente dazu auf Datenobjekte abgebildet, die nach Art einer Variable oder einer anderen Datenstruktur im Steuerungsprogramm verwendet werden können. Bei den Bedien- und Beobachtungsgeräten weisen die grafischen Objekte jeweils Zustandsvariablen auf, wobei beispielsweise der Wert einer Zustandsvariablen mittels einer grafischen Komponente des jeweiligen grafischen Objektes angezeigt werden kann, oder wobei ein grafisch dargestelltes Bedienelement, beispielsweise ein Schalter, Button, Slider oder dergleichen, sich auf den Datenwert einer entsprechenden Zustandsvariablen des grafischen Objektes auswirkt.

Die Zustandsvariablen der grafischen Objekte sind datentechnisch mittelbar oder unmittelbar mit den Datenobjekten der Elemente in den industriellen Steuerungen verknüpft, sodass eine Wechselwirkung zwischen den grafischen Objekten, den Datenobjekten und damit den Elementen der industriellen Automatisierungsanordnung möglich ist.

Ein SCADA-System oder ein anderes Bedien- und Beobachtungsgerät wird in der Regel nach den jeweiligen Maschinen oder Linien entwickelt, die von ihm überwacht und gesteuert werden. In der Regel erhält der Ingenieur eine umfangreiche Liste ("Tag-Liste") von Variablen, auch Datenpunkte oder Tags genannt, auf deren Grundlage Visualisierungen und grafische Benutzeroberflächen (Bildschirme, Screens) erstellt werden sollen.

Im folgenden sollen alle Variablen, Adressen und Strukturen einer industriellen Steuerung (SPS) oder eines anderen Gerätes, was mit einem HMI-oder SCADA-System verknüpft werden soll, als "Tags" bezeichnet werden, wobei gebräuchlicherweise ein Tag einen Namen oder eine Namensstruktur hat, und der Name oder die Bestandteile einer meist hierarchischen Namensstruktur aus einer Bedeutung oder Funktion abgeleitet sind. Ein Tag ist also ein Name, der einer Adresse oder Datenstruktur eines Geräts oder einer SPS oder dgl. zugewiesen ist. Es wird auch als "Variable" oder "Symbol" bezeichnet, je nach Hersteller des Geräts/der SPS.

Angesichts fehlender Dokumentationen und Standards ist die Erstellung (Projektiereng) der Screens oft eine mühsame Aufgabe.

Heutzutage werden Bildschirme oder Screens manuell in einem grafischen Editor entworfen. Dies funktioniert gut für einzelne Bildschirme, lässt sich aber nur schwer auf größere Systeme skalieren. Die Arbeit wiederholt sich oft, da der Designprozess oft auf einem leeren Bildschirm beginnt. Wenn es zu einer Wiederverwendung kommt, geschieht dies oft in Form von Copy & Paste, was im Laufe der Zeit schwer zu pflegen und zu verwalten ist.

Es ist also eine Aufgabe der vorliegenden Erfindung, die Erstellung von grafischen Benutzeroberflächen für industrielle Automatisierungsanordnungen zu vereinfachen und zumindest teilweise zu automatisieren.

Die Aufgabe wird durch ein Verfahren gemäß dem Patentanspruch 1 und durch ein System gemäß dem Patentanspruch 8 gelöst.

Dabei wird ein Verfahren zur Generierung einer Benutzeroberfläche für ein Bedien- und Beobachtungsgerät einer industriellen Automatisierungsanordnung vorgeschlagen, wobei auf der Benutzeroberfläche grafische Objekte zum Bedienen und/oder Beobachten von Elementen der Automatisierungsanordnung platziert werden, und wobei den Elementen zugeordnete Datenobjekte zumindest einer industriellen Steuerung mit den Zustandsvariablen der grafischen Objekte verknüpft werden. Dabei werden in einem ersten Schritt unter Verwendung einer generativen Grammatik anhand von Metainformationen zu den Datenobjekten, insbesondere anhand von Bezeichnern der Datenobjekte, mögliche grafische Objekte für die Benutzeroberfläche identifiziert, in einem zweiten Schritt wird aus den identifizierten grafischen Objekten eine Anzahl möglicher Benutzeroberflächen generiert, in einem dritten Schritt wird für viele oder alle der generierten Benutzeroberflächen eine Zuordnung der Zustandsvariablen der grafischen Objekte zu den Datenobjekten vorgenommen, in einem vierten Schritt wird eine Anzahl aus den im dritten Schritt generierten Benutzeroberflächen ausgewählt, wobei die Auswahl anhand der Menge und/oder Qualität an insgesamten Zuordnungen der jeweiligen Benutzeroberfläche erfolgt, wobei für jede Zuordnung eines grafischen Objekte zu einem Datenobjekt ein Grad der Übereinstimmung der jeweiligen Zustandsvariablen zu dem zugeordneten Datenobjekt bewertet wird, und in einem fünften Schritt werden die im vierten Schritt ausgewählten Benutzeroberflächen zur Verwendung vorgeschlagen oder vorgesehen. Die damit vorgeschlagene Verwendung einer generativen Grammatik für zur Definition möglicher Benutzeroberflächen in den Engineering-Systemen für Bedien- und Beobachtungsgeräte und führt dabei zu einem hohen Flexibilitätsgrad und zu einer deutlichen Entlastung der mit der Generierung der Benutzeroberflächen betrauten Personen.

Die Aufgabe wird außerdem durch ein Engineering-System zur Generierung einer Benutzeroberfläche für ein Bedien- und Beobachtungsgerät einer industriellen Automatisierungsanordnung gelöst, wobei das Engineering-System zum Abruf von Datenobjekten aus einem Programmiersystem für industrielle Steuerungen eingerichtet ist, wobei das Engineering-System zur Identifizierung möglicher grafischer Objekte für die Benutzeroberfläche anhand von Metainformationen zu den Datenobjekten, insbesondere anhand von Bezeichnern der Datenobjekte, unter Verwendung einer generativen Grammatik eingerichtet ist, wobei das Engineering-System zur Zuordnung der Zustandsvariablen der grafischen Objekte zu den Datenobjekten für viele oder alle der generierten Benutzeroberflächen eingerichtet ist, dass das Engineering-System zur Auswahl einer Anzahl aus den im dritten Schritt generierten Benutzeroberflächen eingerichtet ist, wobei vorgesehen ist, dass die Auswahl anhand der Menge und/oder Qualität an insgesamten Zuordnungen der jeweiligen Benutzeroberfläche erfolgt, wobei weiter vorgesehen ist, dass für jede Zuordnung eines grafischen Objekte zu einem Datenobjekt ein Grad der Übereinstimmung der jeweiligen Zustandsvariablen zu dem zugeordneten Datenobjekt bewertet wird, und wobei das Engineering-System zum Vorschlagen oder Verwenden der ausgewählten Benutzeroberflächen eingerichtet ist. Mit diesem Engineering-System können die bereits anhand des Verfahrens diskutierten Vorteile erzielt werden.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für die erfindungsgemäße Anordnung. Die vorteilhaften Ausgestaltungen können sowohl einzeln als auch in sinnfälliger Kombination angewendet werden.

Vorteilhaft werden die Regeln der generativen Grammatik nicht oder nicht ausschließlich manuell erzeugt, sondern aus Benutzeroberflächen bestehender Automatisierungsanordnungen abgeleitet, insbesondere mittels eines lernfähigen Systems, wobei die bestehenden Zuordnungen grafischer Objekte und deren Zustandsvariablen zu den bestehenden Elementen zu jeweiligen Regeln bzw. Regel-Sätzen der Grammatik verarbeitet werden. Dabei wird die generative Grammatik vorzugsweise in einer formalen Beschreibungssprache gespeichert oder mit einer Anzahl von Objekten einer Markup-Sprache, die sich gegenseitig referenzieren, definiert. Damit ist eine universelle Nutzung der Grammatik auch herstellerübergreifend möglich.

Eine bessere Zuordnung der Datenobjekte zu den Zustandsvariablen ist möglich, wenn für die Zuordnung der Zustandsvariablen zu den Datenobjekten die möglichen Zustandsvariablen in der generativen Grammatik durch Ausdrücke mit Platzhaltern definiert sind, wobei die Datenobjekte auf diese Ausdrücke mit Platzhaltern abgebildet werden. Analog dazu kann auch beim Identifizieren der möglichen graphischen Objekte für das Durchsuchen der Metainformationen mit "unscharfen" Bezeichnern der generativen Grammatik gearbeitet werden oder bei der Suche nicht nur auf Übereinstimmungen, sondern auch auf Ähnlichkeiten abgestellt werden.

Insbesondere bei häufigem Einsatz lassen sich bessere Ergebnisse erzielen, wenn in dem dritten Schritt die Zuordnungen mittels eines darauf trainierten neuronalen Netzwerkes vorgenommen werden und durch das neuronale Netzwerk für jede vorgenommene Zuordnung ein Grad der Zuordnung für eine Verwendung in dem vierten Schritt ausgegeben wird.

Grundsätzlich kann für einige oder jedes der grafischen Objekte oder deren Zustandsvariablen ein Bewertungsfaktor vorgesehen werden, so dass bei der automatischen Ausführung des Verfahrens ein Fokus auf wichtige Elemente gelegt werden kann und besser geeignete Benutzeroberflächen (Screens) ausgewählt und zur Nutzung vorgeschlagen werden.

Vorteilhaft soll in den Fällen, in denen in dem ersten Schritt für ein Datenobjekt mehrere verschiedene grafische Objekte aufgefunden werden, in dem zweiten Schritt auf unterschiedlichen generierten Benutzeroberflächen jeweils nur eines der aufgefundenen grafischen Objekte für das betreffende Datenobjekt verwendet werden. So werden verschiedene Alternativen für Screens für die spätere Auswahl kreiert.

Ein Ausführungsbeispiel für das erfindungsgemäße Verfahren wird nachfolgend anhand der Zeichnungen erläutert. Es dient gleichzeitig der Erläuterung einer erfindungsgemäßen Anordnung.

Dabei zeigen:
- Figur 1: in schematischer Darstellung einen Ablauf des Verfahrens, und
- Figur 2: ein vereinfachtes Beispiel für eine Regel der generativen Grammatik.

Die hier vorgeschlagene Methode zur automatischen Generierung von Benutzeroberflächen (im Folgenden auch Bildschirme Screens genannt) basiert auf drei Mechanismen:
1. Benutzeroberflächen- oder Bildschirmgenerierung auf der Grundlage einer Grammatik,
2. Ein Matching-Algorithmus, der Variablen in der Grammatik mit Tags, also Bezeichnern von Datenobjekten aus einer Steuerungsebene, aus einer Tag-Liste verbindet (matcht), und
3. Ein Bewertungsmechanismus, um denjenigen Screen (Benutzeroberfläche, Bildschirm) auszuwählen, der am besten zur Tag-Liste passt.

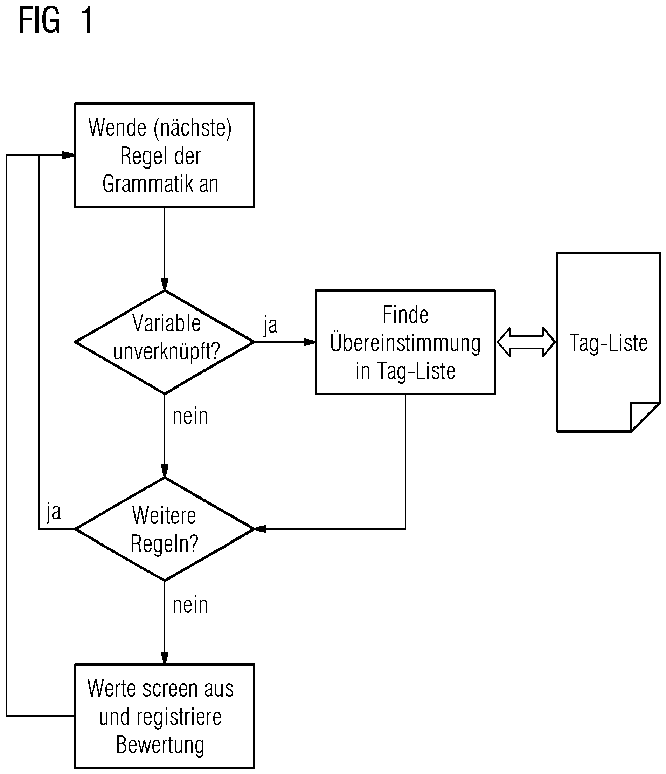

Der grundlegende Ablauf ist in der Figur 1 skizziert. Die Sprache möglicher Benutzeroberflächen/Bildschirme/Screens wird anhand der Grammatikregeln durchsucht. Wenn eine Regel eine noch nicht einem Datenobjekt bzw. dessen Bezeichner (Tag) zugeordnete Variable generiert, versucht der Abgleichmechanismus, sie mit einem Tag in der Tag-Liste abzugleichen. Wenn ein gültiger Bildschirm erreicht wird - es gelten keine Regeln mehr -, wird der derart aufgebaute Bildschirm (Screen) ausgewertet und seine Punktzahl aufgezeichnet. Die Bewertung kann sich an einem Grad der Übereinstimmung der Tags, die dazu sinnfällige Abkürzungen umfassen sollten, mit den Namen der in der Grammatik gefundenen grafischen Objekte bzw. deren Zustandsvariablen orientieren. Es können in der Grammatik auch zu Regeln oder Objekten Bewertungsfaktoren angegeben werden.

Dies geschieht so lange, bis eine bestimmte Anzahl von darzustellenden grafischen Objekten oder Screens generiert wurde oder andere Abbruchkriterien erfüllt sind.

Schließlich wird einem Ingenieur der Bildschirm oder eine Anzahl Bildschirme mit der besten Punktzahl angezeigt und somit vorgeschlagen. Die konkrete Anordnung, also das Layout, der grafischen Objekte kann dabei automatisch erfolgen und ist für den Auswahlprozess nicht entscheidend.

Alternativ kann ein Techniker während der Suche auch um Feedback gebeten werden, oder - wie beschrieben bei mehr als einem Vorschlag - aus einer Liste der am besten bewerteten Bildschirme auswählen.

Das Prinzip der generativen Grammatik ist in vielen Beispielen bekannt, siehe zum Beispiel https://de.wikipedia.org/wiki/Generative_Grammatik.

Die Grammatik beschreibt die "Sprache" möglicher HMI-Systeme und der zugrunde liegenden Automatisierungsanordnungen.

Ein Beispiel:
Screen := PickerLines | ProductionLines | Tanks
Picker := DeltaPicker | Gantry | RobotArm

Das bedeutet, dass eine Benutzeroberfläche / Screen entweder aus Picker-linien (Roboter für Lagersysteme), Produktionslinien oder Tanks besteht. Spezifizierungen können auf jeder Ebene erfolgen. Ein Picker kann entweder ein Delta-Picker (Prallelarmroboter), ein Gantry (Koordinatenroboter) oder ein Roboterarm sein.
Tanks := Tank
Tanks := Tank | Tanks

Tanks bestehen demnach aus mindestens einem bis zu einer beliebigen Anzahl von Tanks.
Tank := tank_picture fill_indicator($fill_percentage)

Ein Tank bzw. das hierzu zu erzeugende grafische Objekt besteht aus einem Hintergrundbild eines Tanks und einem Füllindikator, der mit der Zustandsvariablen $fill_percentage parametrisiert wird.

Das hier vorgestellte Beispiel ist nur eine Möglichkeit, die Grammatik zu definieren. Es könnte auch über Vorlagen definiert werden, die in einer Auszeichnungssprache (Markup-Language, z.B. XML) geschrieben sind und aufeinander verweisen.

Wie aus der Beschreibung der Grammatik ersichtlich, enthalten die generierten Bildschirme bzw. die enthaltenen grafischen Objekte Zustandsvariablen (kurz: Variablen). Diese müssen an Tags gebunden werden, also an Bezeichner für Datenobjekte der Elemente der industriellen Automatisierungsanordnung. Im obigen Beispiel ist das ein beispielsweise ein Register oder eine Variable einer industriellen Steuerung, in der der Wert eines Füllstandsensors gespeichert ist. Diese Variable könnte den Namen tank_fill3 tragen. Es können verschiedene Methoden verwendet werden, um Tags mit den ungebundenen Variablen abzugleichen.

Eine Option sind reguläre Ausdrücke, die beschreiben, welche Tags mit einer Variablen übereinstimmen könnten.

Beispiel:
$fill_percentage -> ([Tt]ank)?\d?.? ([Ffill]).*

Dies bedeutet, dass die folgenden Tags mit $fill_percentage übereinstimmen könnten:
Tank1fill, Fill_indicator, tank_fill3

Neben regulären Ausdrücken können auch andere Mechanismen verwendet werden, zum Beispiel Klassifikatoren, die auf neuronalen Netzen oder SVMs basieren.

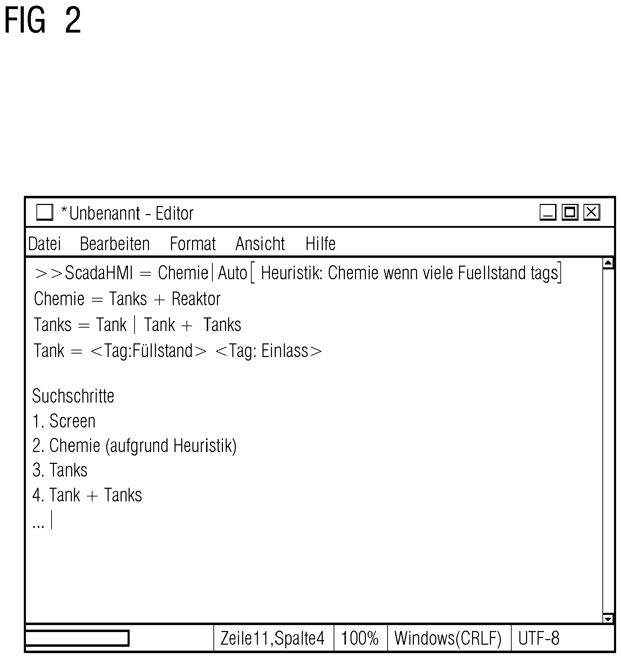

Die Figur 2 zeigt ein weiteres vereinfachtes Beispiel für eine generative Grammatik. Auch hier wird davon ausgegangen, dass aus einem Projektierungssystem eine Liste mit den Datenobjekten bzw. deren Bezeichnern, also eine Tag-Liste, abgerufen wurde. Weitere Informationen, zum Beispiel Zweckinformationen, sind als weitere Metadaten oft verfügbar und nützlich.

Im Beispiel der Figur 2 kann das System aus der Heuristik in Zeile 1 die Branche (Chemie) anhand der Häufigkeit der Tags aus der Tag-Liste selbst bestimmen und damit eine Abfolge, mit der die Regeln der Grammatik abgeprüft werden, festlegen (nämlich die Regeln der identifizierten Branche zuerst). In den folgenden 3 Zeilen sind die Suchmuster für mögliche Zustandsvariablen festgelegt. In den Zeilen danach ist ein Suchmuster bzw. eine Abfolge beschrieben; dies kann durch einen Ingenieur angepasst werden.

Anhand eines Bildschirms bzw. Benutzeroberfläche oder Screens, der durch die Grammatik erstellt wird, und der Tags, die mit ihren Zustandsvariablen übereinstimmen, berechnet der Bewertungsmechanismus schließlich eine Punktzahl. Auf dieser Grundlage kann der Bildschirm ausgewählt werden, der am besten zur angegebenen Tag-Liste passt.

Ein grundlegender Mechanismus würde dazu nur zählen, wie viele Tags mit Variablen (Zustandsvariablen) in einem bestimmten Bildschirm übereinstimmen würden. Es sind jedoch auch ausgefeiltere Mechanismen anwendbar, bei denen Übereinstimmungen nicht "boolesch" sind, sondern verschiedene Variablen unterschiedliche Wichtigkeitsgrade oder Wertungsfaktoren oder dgl. haben oder Variablen Einschränkungen haben, die verhindern, dass sie mit Tags abgeglichen werden, die beispielsweise bereits anderen Variablen zugewiesen wurden.

Insbesondere die Grammatik, die mögliche Bildschirme definiert, verleiht dem beschriebenen Ansatz ein hohes Maß an Flexibilität. Klassische Ansätze stützen sich auf eine begrenzte Anzahl von Vorlagen, die möglicherweise nicht der großen Vielfalt industrieller Prozesse und Maschinen Rechnung tragen.

## Patentansprüche

1. Verfahren zur Generierung einer Benutzeroberfläche für ein Bedien- und Beobachtungsgerät einer industriellen Automatisierungsanordnung,
wobei auf der Benutzeroberfläche (Screen) grafische Objekte zum Bedienen und/oder Beobachten von Elementen der Automatisierungsanordnung platziert werden,
wobei den Elementen zugeordnete Datenobjekte zumindest einer industriellen Steuerung mit den Zustandsvariablen der grafischen Objekte verknüpft werden,
**dadurch gekennzeichnet,**
**dass** in einem ersten Schritt unter Verwendung einer generativen Grammatik anhand von Metainformationen zu den Datenobjekten, insbesondere anhand von Bezeichnern (Tags) der Datenobjekte, mögliche grafische Objekte für die Benutzeroberfläche (Screen) identifiziert werden, dass in einem zweiten Schritt aus den identifizierten grafischen Objekten eine Anzahl möglicher Benutzeroberflächen (Screen) generiert wird,
**dass** in einem dritten Schritt für viele oder alle der generierten Benutzeroberflächen (Screen) eine Zuordnung der Zustandsvariablen der grafischen Objekte zu den Datenobjekten vorgenommen wird,
**dass** in einem vierten Schritt eine Anzahl aus den im dritten Schritt generierten Benutzeroberflächen (Screen) ausgewählt wird, wobei die Auswahl anhand der Menge und/oder Qualität an insgesamten Zuordnungen der jeweiligen Benutzeroberfläche (Screen) erfolgt, wobei für jede Zuordnung eines grafischen Objekte zu einem Datenobjekt ein Grad der Übereinstimmung der jeweiligen Zustandsvariablen zu dem zugeordneten Datenobjekt bewertet wird, und
**dass** in einem fünften Schritt die im vierten Schritt ausgewählten Benutzeroberflächen (Screen) zur Verwendung vorgeschlagen oder vorgesehen werden.

2. Verfahren nach Patentanspruch 1,
**dadurch gekennzeichnet,**
**dass** vor dem ersten Schritt die Regeln der generativen Grammatik aus Benutzeroberflächen (Screen) bestehender Automatisierungsanordnung abgeleitet werden, insbesondere mittels eines lernfähigen Systems, wobei die bestehenden Zuordnungen grafischer Objekte und deren Zustandsvariablen zu den bestehenden Elementen zu jeweiligen Regeln der Grammatik verarbeitet werden.

3. Verfahren nach einem der vorhergehenden Patentansprüche,
**dadurch gekennzeichnet,**
**dass** die generative Grammatik in einer formalen Beschreibungssprache gespeichert wird oder mit einer Anzahl von Objekten einer Markup-Sprache, die sich gegenseitig referenzieren, definiert wird.

4. Verfahren nach einem der vorhergehenden Patentansprüche,
**dadurch gekennzeichnet,**
**dass** in dem dritten Schritt für die Zuordnung der Zustandsvariablen zu den Datenobjekten die möglichen Zustandsvariablen in der generativen Grammatik durch Ausdrücke mit Platzhaltern definiert sind, wobei die Datenobjekte auf diese Ausdrücke mit Platzhaltern abgebildet werden.

5. Verfahren nach einem der vorhergehenden Patentansprüche,
**dadurch gekennzeichnet,**
**dass** in dem dritten Schritt die Zuordnungen mittels eines darauf trainierten neuronalen Netzwerkes vorgenommen werden und durch das neuronale Netzwerk für jede vorgenommene Zuordnung ein Grad der Zuordnung für eine Verwendung in dem vierten Schritt ausgegeben wird.

6. Verfahren nach einem der vorhergehenden Patentansprüche,
**dadurch gekennzeichnet,**
**dass** für einige oder jedes der grafischen Objekte oder deren Zustandsvariablen ein Bewertungsfaktor vorgesehen wird.

7. Verfahren nach einem der vorhergehenden Patentansprüche,
**dadurch gekennzeichnet,**
**dass** in dem ersten Schritt für ein Datenobjekt mehrere verschiedene grafische Objekte aufgefunden werden, wobei in dem zweiten Schritt auf unterschiedlichen generierten Benutzeroberflächen (Screen) jeweils nur eines der aufgefundenen grafischen Objekte für das betreffende Datenobjekt verwendet wird.

8. Engineering-System zur Generierung einer Benutzeroberfläche (Screen) für ein Bedien- und Beobachtungsgerät einer industriellen Automatisierungsanordnung,
**dadurch gekennzeichnet,**
**dass** das Engineering-System zum Abruf von Datenobjekten aus einem Programmiersystem für industrielle Steuerungen eingerichtet ist,
**dass** das Engineering-System zur Identifizierung möglicher grafischer Objekte für die Benutzeroberfläche (Screen) anhand von Metainformationen zu den Datenobjekten, insbesondere anhand von Bezeichnern (Tags) der Datenobjekte, unter Verwendung einer generativen Grammatik eingerichtet ist,
**dass** das Engineering-System zur Zuordnung der Zustandsvariablen der grafischen Objekte zu den Datenobjekten für viele oder alle der generierten Benutzeroberflächen (Screen) eingerichtet ist,
**dass** das Engineering-System zur Auswahl einer Anzahl aus den im dritten Schritt generierten Benutzeroberflächen (Screen) eingerichtet ist, wobei vorgesehen ist, dass die Auswahl anhand der Menge und/oder Qualität an insgesamten Zuordnungen der jeweiligen Benutzeroberfläche (Screen) erfolgt, wobei weiter vorgesehen ist, dass für jede Zuordnung eines grafischen Objekte zu einem Datenobjekt ein Grad der Übereinstimmung der jeweiligen Zustandsvariablen zu dem zugeordneten Datenobjekt bewertet wird, und
**dass** das Engineering-System zum Vorschlagen oder Verwenden der ausgewählten Benutzeroberflächen (Screen) eingerichtet ist.
